# EUROPÄISCHE PATENTSCHRIFT

(11) **EP 1 137 345 B1**
(45) Veröffentlichungstag und Bekanntmachung des Hinweises auf die Patenterteilung: **12.03.2003**
(21) Anmeldenummer: 99966851.0
(22) Anmeldetag: 07.12.1999
(51) Int. Cl.: A23P 1/14, A23P 1/08, A23K 1/00

(54) **VERFAHREN ZUM VAKUUMBESCHICHTEN EINES EXTRUDIERTEN MATERIALS**
METHOD FOR VACUUM COATING AN EXTRUDED MATERIAL
PROCEDE POUR APPLIQUER UN MATERIAU DE RECOUVREMENT SOUS VIDE SUR UN MATERIAU EXTRUDE

(30) Priorität: 09.12.1998 DE 19856680
(43) Veröffentlichungstag der Anmeldung: 04.10.2001
(73) Patentinhaber: Mars, Inc., McLean, VA 22101-3883 (US)
(72) Erfinder: SCHMIDT, Siegfried, D-27283 Verden (DE)
(74) Vertreter: Goddar, Heinz J., Dr.
(86) Internationale Anmeldenummer: DE9903973
(87) Internationale Veröffentlichungsnummer: WO00033674

(56) Entgegenhaltungen:
- WO-A-98/03080
- WO-A-98/09542
- GB-A- 2 324 701
- PATENT ABSTRACTS OF JAPAN vol. 014, no. 377 (C-0748), 15. August 1990 (1990-08-15) & JP 02 138944 A (NISSHIN FLOUR MILLING CO LTD), 28. Mai 1990 (1990-05-28)

## Beschreibung

Die Erfindung betrifft ein Verfahren zum Vakuumbeschichten eines extrudierten Materials, insbesondere eines (Tier-)Nahrungsmittels, entsprechend dem Oberbegriff des Anspruchs 1.

Ein derartiges Verfahren ist bereits aus EP-A-0927522 bekannt.

Bei zahlreichen extrudierten Produkten, insbesondere im Nahrungs- bzw. Tiernahrungsmittelsektor, besteht aus herstellungstechnischen und produktbezogenen Gründen das Bedürfnis, bestimmte Inhaltsstoffe des fertigen Endprodukts, beispielsweise Fettstoffe, noch nicht in der zu extrudierenden Mischung zu haben, sondern diese erst nach dem Extrusionsvorgang hinzuzufügen, so daß ein extrudiertes Erzeugnis als Träger für nachträglich aufzubringende Stoffe dient.

Eine bekannte Vorgehensweise besteht darin, daß ein Erzeugnis, das nach dem Extrudieren porös sein kann, mit gewünschten Inhaltsstoffen versehen wird, indem das Extrusionsprodukt zunächst getrocknet und dann einem Unterdruck ausgesetzt wird, wobei es bei reduziertem Druck mit einem Beschichtungsmaterial beschichtet wird, welches eine fließfähige Konsistenz aufweist. Bei Beendigung der Unterdruckphase drückt der zunehmende Druck das Beschichtungsmaterial in die Poren (soweit vorhanden) des extrudierten Materials, so daß dieses einen erhöhten Gehalt an z.B. Fett aufweist, ohne daß sich dieses überwiegend an der Oberfläche befindet und zu einem übermäßigen Kleben des Produkts führt. Das poröse, extrudierte Erzeugnis dient somit teilweise hauptsächlich als Träger für das hinzuzufügende fließfähige Material. Man erreicht auf diese Weise bei einem Unterdruck von beispielsweise 200 mbar Fettgehalte von bis zu 30 Gew.-% im Endprodukt.

Nachteilig bei diesem an sich bewährten Beschichtungsverfahren ist der relativ hohe Gesamtaufwand für Trocknung und Beschichtung sowie die Tatsache, daß die Aufnahmefähigkeit des extrudierten Erzeugnisses für ein Beschichtungsmaterial auch bei Anwendung von Unterdruck nicht immer ausreichend ist.

Die Aufgabe der vorliegenden Erfindung besteht darin, das bekannte Beschichtungsverfahren in dieser Hinsicht zu verbessern, d.h. den Aufwand insbesondere für die Trocknung zu senken und auch eine höhere Aufnahmefähigkeit für Beschichtungsmaterial zu schaffen.

Diese Aufgabe wird bei einem Verfahren zum Vakuumbeschichten eines extrudierten Materials, insbesondere (Tier-)Nahrungsmittels, bei dem das extrudierte Material während einer Unterdruckphase bei reduziertem Druck mit einem fließfähigen Beschichtungsmaterial beschichtet wird, erfindungsgemäß dadurch gelöst, daß das extrudierte Material während der Unterdruckphase zunächst getrocknet und anschließend mit dem Beschichtungsmaterial beschichtet wird.

Die Trocknung des extrudierten Materials nicht vor, sondern während der Unterdruckphase bringt überraschenderweise eine Reihe von Vorteilen. Zunächst einmal expandiert das ggf. bereits poröse, extrudierte Material aufgrund der Verdampfung von Wasser während der Unterdruckphase weiter, wodurch eine Porenerzeugung bzw. eine Vergrößerung des Porenvolumens und eine entsprechend vergrößerte Aufnahmefähigkeit für fließfähiges Beschichtungsmaterial erzielt wird. Darüber hinaus läßt sich der Trocknungsvorgang bei Unterdruck wesentlich besser steuern als eine Trocknung beispielsweis in Heißluft, da bei reduziertem Druck eine Verdampfung auch aus weiter innenliegenden Materialzonen erfolgt, die ansonsten einem Kontakt mit Trocknungsluft nicht zugänglich wären. Dadurch treten geringere lokale Schwankungen des Feuchtigkeitsgehalts im Produkt auf, so daß der Mittelwert der Feuchtigkeit um etwa 1% angehoben werden kann, was selbstverständlich mit einer erheblichen Kosteneinsparung verbunden ist. Außerdem wird das extrudierte Produkt aufgrund des Wärmeentzugs im Trocknungsvorgang gleichzeitig gekühlt, so daß eine separate Kühlung des mit einer Temperatur von ca. 100°C aus dem Extruder kommenden Materials nicht erforderlich ist.

Es kann vorgesehen sein, daß das Beschichtungsmaterial fett- und/oder wasserhaltig ist.

Bevorzugt ist vorgesehen, daß das extrudierte Material porös ist und während der Unterdruckphase expandiert.

Vorzugsweise hat das extrudierte Material zu Beginn der Unterdruckphase eine Temperatur von mehr als 90°C.

In einer bevorzugten Ausführungsform ist vorgesehen, daß das extrudierte Material zu Beginn der Unterdruckphase einen auf sein Trockengewicht bezogenen Feuchtegehalt von nicht mehr als 25 Gew.-% aufweist.

In einer Ausführungsform der Erfindung ist vorgesehen, daß der Feuchtegehalt des extrudierten Materials während der Unterdruckphase um 6 Gew.-%, bezogen auf das Trockengewicht, gesenkt wird.

Es kann vorgesehen sein, daß das extrudierte Material vor Beginn der Unterdruckphase bei Normaldruck vorgetrocknet wird.

Vorzugsweise ist vorgesehen, daß das extrudierte Material nach Trocknung und Beschichtung einen auf sein Trockengewicht bezogenen End-Feuchtegehalt von 9 Gew.-% aufweist.. Vorzugsweise hat das extrudierte Material nach Trocknung und Beschichtung eine Temperatur von 25°C.

Es kann vorgesehen sein, daß der Druck während der Unterdruckphase auf 200 mbar abgesenkt wird.

In einer Ausführungsform kann vorgesehen sein, daß der Druck zu Beginn der Unterdruckphase auf 40 mbar abgesenkt wird. Hierbei kann vorgesehen sein, daß der Druck auf 40 mbar gehalten wird, bis das extrudierte Material eine Temperatur von 30°C oder weniger erreicht hat.

Die Unterdruckphase kann insgesamt bis zu 5 Minuten dauern.

Es kann vorgesehen sein, daß während der Unterdruckphase Zusatzenergie, insbesondere in Form von Infrarot- oder Mikrowellenstrahlung, zugeführt wird.

Weitere Vorteile und Merkmale der Erfindung ergeben sich aus der folgenden Beschreibung bevorzugter Ausführungsbeispiele, wobei auf eine Zeichnung Bezug genommen wird, in der
Fig. 1 beispielhaft den zeitlichen Verlauf von Produkttemperatur und Druck in einer Ausführungsform des erfindungsgemäßen Verfahrens zeigt;
Fig. 2 beispielhaft eine Anordnung zur Ausführung des erfindungsgemäßen Verfahrens zeigt; und
Fig. 3 in einer ähnlichen Darstellung wie Fig. 1 den zeitlichen Verlauf von Produkttemperatur und Druck bei einem bekannten Verfahren zeigt.

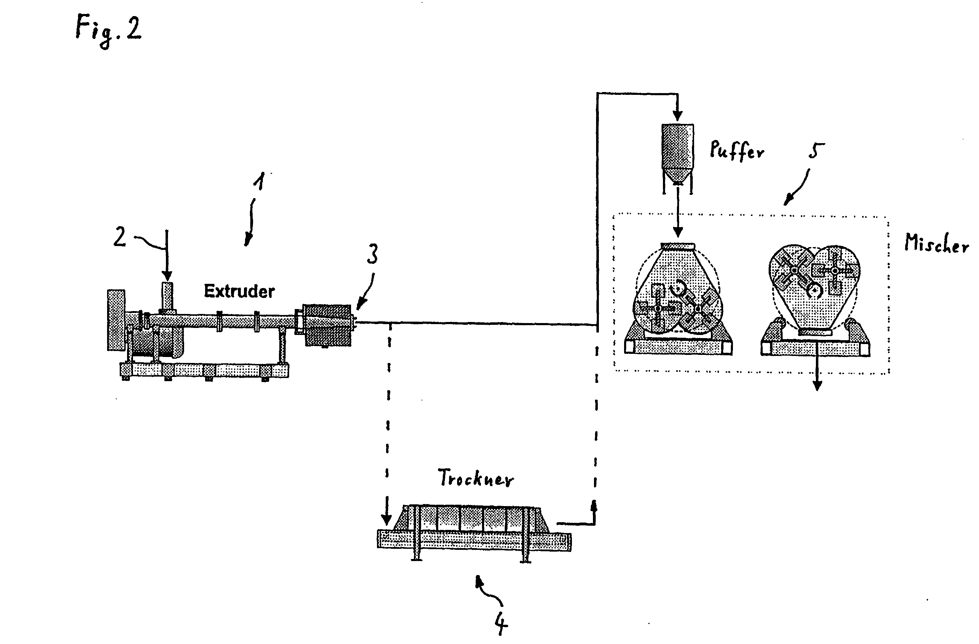

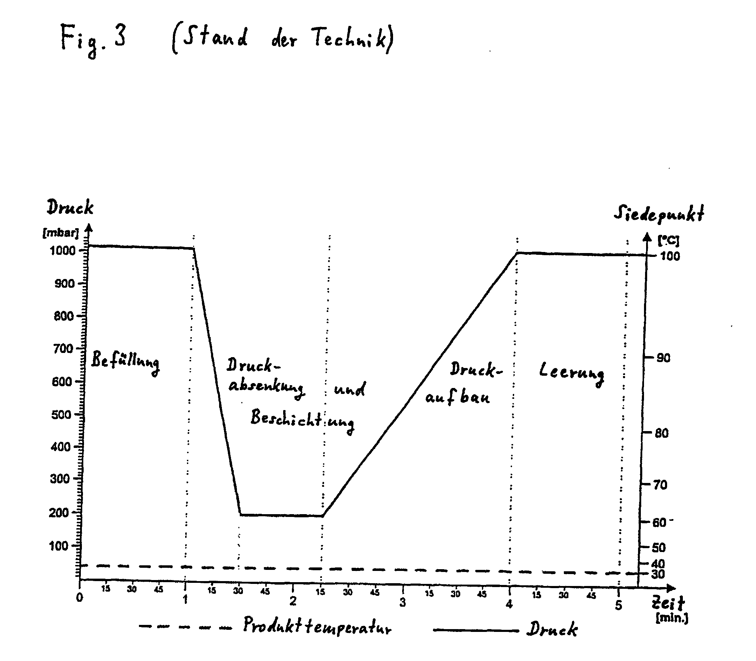

Zur Erläuterung der bekannten Verfahrensweise sei zunächst auf Fig. 2 und 3 Bezug genommen. Ein zu extrudierendes Gemisch tritt in den Extruder 1 ein (Pfeil 2) und verläßt diesen an dessen Austrittsmündung 3 mit einer Temperatur von ca. 100°C. Bezogen auf das Trockengewicht des extrudierten Erzeugnisses beträgt dessen Feuchte an dieser Stelle etwa 25%*.* Das extrudierte Erzeugnis wird in einem Trockner 4 soweit getrocknet, daß es nach einer Beschichtung in einem Mischer 5 einen auf die Trockenmasse bezogenen Feuchtigkeitsgehalt von 9 Gew.-% und eine Temperatur von 25°C aufweist. Der hierfür am Austritt des Trockners zu erreichende Feuchtegehalt ist davon abhängig, mit was für einem Beschichtungsmaterial das extrudierte Material im Mischer 5 beschichtet wird, d.h. von dessen Wassergehalt. Beispielsweise kann bei Beschichten mit einem wasserhaltigen Beschichtungsmaterial ein Feuchtegehalt von 6 Gew.-% am Austritt aus den Trockner erforderlich sein, um auf einen End-Feuchtegehalt von 9 Gew.-% zu kommen. Umgekehrt kann bei einer Beschichtung mit wenig oder nicht wasserhaltigem Beschichtungsmaterial, beispielsweise einer Fettmasse, ein höherer Feuchtegehalt als 9% am Austritt des Trockners 4 bzw. beim Eintreten in den Mischer 5 zulässig sein, da der auf das Trockengewicht bezogene Feuchtigkeitsanteil bei Auftragen einer wasserfreien Masse abnimmt.

Fig. 3 erläutert die zeitliche Abfolge der Vorgänge bei der Vakuumbeschichtung innerhalb des Mischers 5 nach dem Stand der Technik. Extrudiertes, getrocknetes und auf ca. 30°C (unterhalb 50°C) abgekühltes, poröses Material wird bei Umgebungsdruck in den mit seiner Beschickungsöffnung nach oben weisenden Mischer 5 eingefüllt (linke Mischerdarstellung in Fig. 2). Die Einfüllöffnung wird verschlossen und der Innendruck innerhalb einer relativ kurzen Zeit von ca. 1,5 Minuten auf etwa 200 Millibar abgesenkt. Vorher, anschließend oder gleichzeitig wird Beschichtungsmaterial in den Mischer eingeführt und das extrudierte Material mit diesem vermischt. Danach wird der Druck im Mischer wieder bis auf Umgebungsdruck gesteigert, wobei das Beschichtungsmaterial tief in die porösen Hohlräume des extrudierten Materials gedrückt wird. Wie Fig. 3 zeigt, beträgt die Produkttemperatur während des gesamten Vorgangs nahezu unverändert ca. 30°C, was der Einfülltemperatur entspricht.

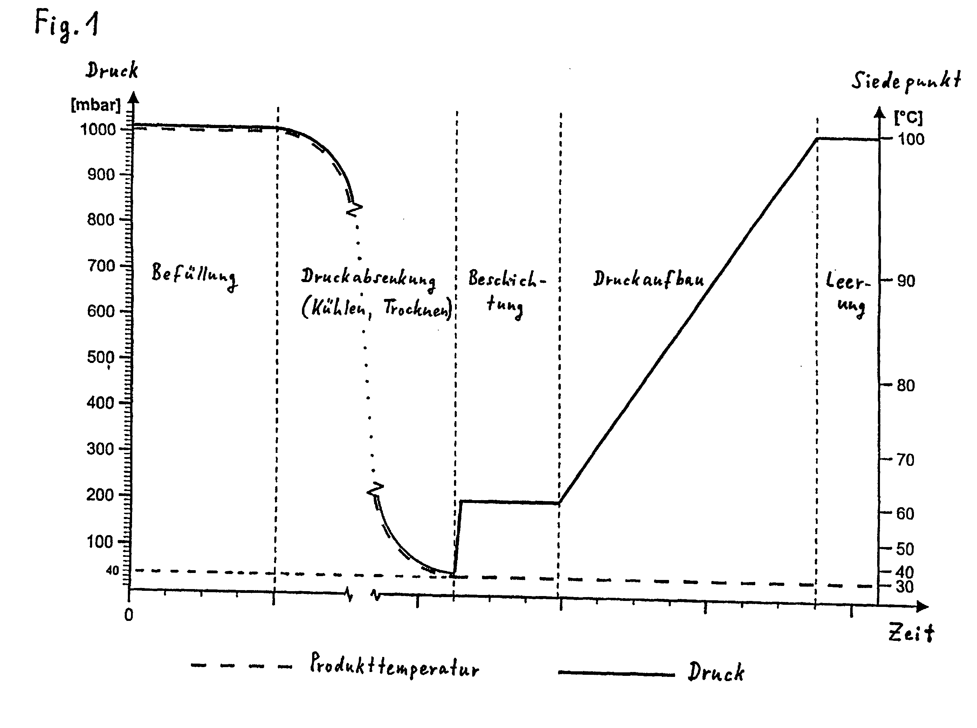

Das erfindungsgemäße Verfahren zeichnet sich gegenüber diesem Stand der Technik dadurch aus, daß das extrudierte Produkt, welches den Extruder 1 an dessen Austrittsmündung mit ca. 100°C verläßt, zunächst nicht gekühlt wird und mit ca. 95°C (aufgrund des unvermeidlichen Transportweges nimmt die Temperatur des extrudierten Produkts um ca. 5°C ab) in den Mischer 5 eingeleitet wird. Dies ist in Fig. 1, die in ähnlicher Weise wie Fig. 3 den zeitlichen Verlauf von Produkttemperatur und Druck während des Beschichtungs- und Mischungsvorgangs zeigt, weiter erläutert. Es sei noch darauf verwiesen, daß in Fig. 1 und 3 auf der rechten Seite der Siedepunkt von Wasser aufgetragen ist, der dem jeweils links angegebenen Druck entspricht. 200 mbar entsprechen somit einem Siedepunkt von ca. 60°C, 40 mbar ca. 30°C usw.

Das extrudierte, poröse Material gelangt mehr oder weniger unmittelbar aus dem Extruder in den Mischer, wobei die Temperatur nahezu 100°C beträgt. Nach Verschließen des Mischers wird der Druck auf ca. 200 mbar, oder wie in Fig. 1 dargestellt, sogar bis auf 40 mbar abgesenkt, womit aufgrund der Siedepunktabsenkung und der damit einhergehenden Verdampfung des in dem extrudierten Material enthaltenen Wassers eine erhebliche Abkühlung verbunden ist. Nachdem der in seinem zeitlichen Verlauf in Fig. 1 nicht genau dargestellte Druck seinen Tiefstpunkt von ca. 40 mbar erreicht hat oder eine gewisse Zeit auf diesem Wert verharrt hat, ist beispielsweise dann, wenn in dem extrudierten Material von nahezu 100°C ein Feuchtigkeitsgehalt von 25 Gew.-% vorhanden war, nach Abkühlung auf 30°C (Siedepunkt bei 40 mbar) noch ein Feuchtigkeitsgehalt von 19 Gew.-% vorhanden, d.h. durch die "Vakuumtrocknung" wurde eine Abnahme des Feuchtigkeitsgehalts um 6 Gew.-% bei einer gleichzeitigen Abkühlung auf 30°C erreicht.

Nach einer derartigen Abkühlung und Trocknung folgt eine Beschichtung mit einem gewünschten Material sowie ein Druckanstieg auf etwa 200 mbar, wobei die Temperatur des Produkts weiterhin 30°C beträgt. Dies sowie die Entleerung des Mischbehälters (rechte Mischerdarstellung in Fig. 2) entsprechen im wesentlichen der Vorgehensweise nach dem Stand der Technik.

Der in Fig. 1 lediglich angedeutete zeitliche Druckverlauf bei der Druckabsenkung von Umgebungsdruck auf 40 mbar, oder zumindest 200 mbar, hängt unter anderem davon ab, mit welchem Feuchtigkeitsgehalt das extrudierte Material in den Mischer eingeführt wird und wie stark getrocknet werden soll, d.h. mit was für einer Beschichtung (wasserhaltig oder wasserfrei) beschichtet wird. Außerdem kann durch die Geschwindigkeit der Druckabsenkung das Aufblähverhalten des extrudierten Materials beeinflußt werden.

Unter der Grundannahme, daß in einem bestimmten Verfahrensablauf in der Unterdruckphase im Mischer stets eine Reduzierung des Feuchtigkeitsgehalts um 6 Gew.-% möglich ist, ohne eine Temperatur von 25°C bis 30°C zu unterschreiten, sind beispielsweise die folgenden Verfahrensalternativen denkbar:
1. Extrudiertes Material, welches bei 16 Gew.-% Feuchtigkeit und 95°C in den Mischer eintritt, erreicht nach Druckabbau auf 40 mbar nach einer bestimmten Zeit einen Feuchtigkeitsgehalt von 10 Gew.-% und eine Temperatur von 25°C. Nach Beschichtung mit einem fetthaltigen, wenig oder nicht wasserhaltigen Beschichtungsmaterial wird der gewünschte Feuchtigkeitsgehalt von 9 Gew.-% erreicht (die Abgabetemperatur beträgt unverändert 25°C).
2. Wenn die Feuchtigkeitsgehalte des extrudierten Materials höher liegen, muß entweder mit externer Energiezufuhr während der Unterdruckphase oder mit Vortrocknung vor der Unterdruckphase gearbeitet werden.

Beträgt der Feuchtigkeitsgehalt des extrudierten Materials beispielsweise 25% und ist eine Beschichtung mit wasserhaltigem Material vorgesehen, kann das extrudierte Material zunächst (bei 95°C) auf 12 Gew.-% vorgetrocknet werden, bevor es erfindungsgemäß im Verlaufe der Druckabsenkung auf 40 mbar auf 6 Gew.-% Feuchtigkeit und 25°C getrocknet wird. Durch Beschichtung mit wasserhaltigem Material werden 9 Gew.-% Feuchtigkeit bei 25°C erreicht.

Alternativ wäre eine Trocknung auf einen höheren Feuchtigkeitsgehalt, etwa 16 Gew.-%, ausreichend, wenn die Beschichtung mit einem wenig oder nicht wasserhaltigen Material erfolgt.

Dann werden im Mischer bei Druckabsenkung beispielsweise 10 Gew.-% Feuchtigkeit und 25°C erreicht, wobei sich nach Fettbeschichtung 9 Gew.-% Feuchtigkeit (bei 25°C) einstellen.

Wenn bei einem anfänglichen Feuchtigkeitsgehalt von 25 Gew.-% ohne Vortrocknung gearbeitet werden soll, muß während der Unterdruckphase Energie zugeführt werden, insbesondere in Form einer Mikrowellenbeheizung. Dadurch können die gewünschten Werte von z.B. 6 Gew.-% Feuchtigkeit bei 25°C vor der Beschichtung erzielt werden.

Da bei Vakuumtrocknung kaum lokale Schwankungen des Feuchtigkeitsgehalts bzw. "Spitzenwerte" auftreten, ergibt sich eine sehr genaue Feuchteeinstellung, wodurch der Mittelwert des Feuchtegehalts im Vergleich zur bisherigen Vorgehensweise mit einem Heißlufttrockner um ca. 1 Gew.-% angehoben werden kann. Die auch bei der Erfindung in manchen Fällen zweckmäßige Verwendung eines (Heißluft-)Vortrockners ändert hieran nichts, da hierdurch lediglich der Gesamt-Feuchtigkeitsgehalt vor dem eigentlichen Trocknungsschritt abgesenkt wird, während die eigentliche "Feineinstellung" während der Unterdruckphase erfolgt. Die Energieeinsparungen, die sich hieraus ergeben, sind beträchtlich.

Durch zeitliche Steuerung der Druckabsenkung bzw. des Druckverlaufs kann darauf Einfluß genommen werden, ob das extrudierte Produkt (weiter) aufgebläht werden soll oder nicht. In manchen Fällen kann es zweckmäßig sein, das extrudierte Produkt in einem Vortrockner soweit zu verfestigen, daß es nicht zu stark klebt.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Vakuumbeschichten eines extrudierten Nahrungsmittels, insbesondere Tiernahrungsmittel, bei dem wasserhaltiges extrudiertes Material mit einer Temperatur von nahezu 100°C in einen Mischer gelangt und dort während einer Unterdruckphase bei reduziertem Druck getrocknet und mit einem fließfähigen Beschichtungsmaterial beschichtet wird, **dadurch gekennzeichnet, daß** der Druck während der Unterdruckphase zwischen 200 mbar und 40 mbar liegt, wobei das Material zunächst getrocknet und auf eine Temperatur von 60°C oder weniger abgekühlt wird und anschließend mit dem Beschichtungsmaterial beschichtet wird.

2. Verfahren nach Anspruch 1, **dadurch gekennzeichnet, daß** das Beschichtungsmaterial fettund/oder wasserhaltig ist.

3. Verfahren nach Anspruch 1 oder 2, **dadurch gekennzeichnet, daß** das extrudierte Material porös ist und während der Unterdruckphase expandiert.

4. Verfahren nach einem der Ansprüche 1 bis 3, **dadurch gekennzeichnet, daß** das extrudierte Material zu Beginn der Unterdruckphase eine Temperatur von mehr als 90°C hat.

5. Verfahren nach einem der Ansprüche 1 bis 4, **dadurch gekennzeichnet, daß** das extrudierte Material zu Beginn der Unterdruckphase einen auf sein Trockengewicht bezogenen Feuchtegehalt von nicht mehr als 25 Gew.-% aufweist.

6. Verfahren nach einem der vorangehenden Ansprüche, **dadurch gekennzeichnet, daß** der Feuchtegehalt des extrudierten Materials während der Unterdruckphase um 6 Gew.-%, bezogen auf sein Trockengewicht, gesenkt wird.

7. Verfahren nach einem der vorangehenden Ansprüche, **dadurch gekennzeichnet, daß** das extrudierte Material vor Beginn der Unterdruckphase bei Normaldruck vorgetrocknet wird.

8. Verfahren nach einem der vorangehenden Ansprüche, **dadurch gekennzeichnet, daß** das extrudierte Material nach Trocknung und Beschichtung einen auf sein Trockengewicht bezogenen End-Feuchtegehalt von 9 Gew.-% aufweist.

9. Verfahren nach einem der vorangehenden Ansprüche, **dadurch gekennzeichnet, daß** das extrudierte Material nach Trocknung und Beschichtung eine Temperatur von 25°C hat.

10. Verfahren nach einem der vorangehenden Ansprüche, **dadurch gekennzeichnet, daß** der Druck während der Unterdruckphase auf 200 Millibar abgesenkt wird.

11. Verfahren nach einem der vorangehenden Ansprüche, **dadurch gekennzeichnet, daß** der Druck zu Beginn der Unterdruckphase auf 40 Millibar abgesenkt wird.

12. Verfahren nach Anspruch 11, **dadurch gekennzeichnet, daß** der Druck von 40 Millibar gehalten wird, bis das extrudierte Material eine Temperatur von 30°C oder weniger erreicht hat.

13. Verfahren nach einem der vorangehenden Ansprüche, **dadurch gekennzeichnet, daß** während der Unterdruckphase Zusatzenergie, insbesondere in Form von Infrarot- oder Mikrowellenstrahlung, zugeführt wird.

## Claims

1. A method of vacuum coating an extruded foodstuff, especially an animal foodstuff; in which extruded material containing water passes into a mixer at a temperature of nearly 100°C and is dried there under reduced pressure during a negative pressure phase and is coated with a flowable coating material, **characterized in that** the pressure lies between 200 mbar and 40 mbar during the negative pressure phase, while the material is firstly dried and cooled to a temperature of 60°C or less and then coated with the coating material.

2. A method according to claim 1, **characterized in that** the coating material contains fat and/or water.

3. A method according to claim 1 or 2, **characterized in that** the extruded material is porous and expands during the negative pressure phase.

4. A method according to any of claims 1 to 3, **characterized in that** the extruded material has a temperature of more than 90°C at the beginning of the negative pressure phase.

5. A method according to any of claims 1 to 4, **characterized in that** the extruded material has a moisture content referred to its dry weight of no more than 25% by weight at the beginning of the negative pressure phase.

6. A method according to any of the preceding claims, **characterized in that** the moisture content of the extruded material is lowered during the negative pressure phase to 6% by weight, referred to its dry weight.

7. A method according to any of the preceding claims, **characterized in that** the extruded material is pre-dried at normal pressure before the beginning of the negative pressure phase.

8. A method according to any of the preceding claims, **characterized in that** the extruded material has a final moisture content of 9% by weight, referred to its dry weight, after drying and coating.

9. A method according to any of the preceding claims, **characterized in that** the extruded material has a temperature of 25°C after drying and coating.

10. A method according to any of the preceding claims, **characterized in that** the pressure is lowered to 200 mbar during the negative pressure phase.

11. A method according to any of the preceding claims, **characterized in that** the pressure is lowered to 40 mbar at the beginning of the negative pressure phase.

12. A method according to claim 11, **characterized in that** the pressure of 40 mbar is held until the extruded material has reached a temperature of 30°C or less.

13. A method according to any of the preceding claims, **characterized in that** additional energy, especially in the form of infrared or microwave radiation, is added during the negative pressure phase.

## Revendications

1. Procédé d'application sous vide d'un revêtement sur des aliments extrudés, plus particulièrement sur des aliments pour animaux, procédé dans lequel le matériau extrudé contenant de l'eau est placé dans un mélangeur à une température d'environ 100 °C où il y sera séché pendant une phase de dépression à pression réduite puis sera recouvert d'un matériau de revêtement capable de se fluidifier, **caractérisé en ce que** la pression se situe entre 200 et 40 millibars pendant la phase de dépression, le matériau étant d'abord séché et refroidi à une température égale ou inférieure à 60 °C, puis étant ensuite recouvert avec le matériau de revêtement.

2. Procédé selon la revendication 1, **caractérisé en ce que** le matériau de revêtement contient de la graisse et/ou de l'eau.

3. Procédé selon la revendication 1 ou 2, **caractérisé en ce que** le matériau extrudé est poreux et est expansé pendant la phase de dépression.

4. Procédé selon une des revendications 1 à 3, **caractérisé en ce que** le matériau extrudé est à une température de plus de 90 °C au début de la phase de dépression.

5. Procédé selon une des revendications 1 à 4, **caractérisé en ce que** le matériau extrudé au début de la phase de dépression présente un taux d'humidité n'excédant pas 25 % en poids par rapport à son poids sec.

6. Procédé selon une des revendications précédentes, **caractérisé en ce que** le taux d'humidité du matériau extrudé pendant la phase de dépression est réduit à 6 % du poids total par rapport à son poids sec.

7. Procédé selon une des revendications précédentes, **caractérisé en ce que** le matériau extrudé est pré-séché à une pression normale avant le début de la phase de dépression.

8. Procédé selon une des revendications précédentes, **caractérisé en ce que** le matériau extrudé présente après séchage et revêtement un taux d'humidité final de 9 % en poids par rapport à son poids sec.

9. Procédé selon une des revendications précédentes, **caractérisé en ce que** le matériau extrudé est à une température de 25 °C après séchage et revêtement.

10. Procédé selon une des revendications précédentes, **caractérisé en ce que** la pression pendant la phase de dépression est abaissée à 200 millibars.

11. Procédé selon une des revendications précédentes, **caractérisé en ce que** la pression au début la phase de dépression est abaissée à 40 millibars.

12. Procédé selon la revendication 11, **caractérisé en ce que** la pression de 40 millibars sera maintenue jusqu'à ce que le matériau extrudé ait atteint une température égale ou inférieure à 30 °C.

13. Procédé selon une des revendications précédentes, **caractérisé en ce que** pendant la phase de dépression, de l'énergie supplémentaire, plus particulièrement sous forme de rayonnement infrarouge ou micro-ondes, est ajoutée.
